# EUROPÄISCHE PATENTSCHRIFT

(11) **EP 2 597 574 B1**
(45) Veröffentlichungstag und Bekanntmachung des Hinweises auf die Patenterteilung: **20.12.2017**
(21) Anmeldenummer: 13000706.5
(22) Anmeldetag: 19.05.2008
(51) Int. Cl.: G06F 12/02

(54) **Verfahren zur Speicherverwaltung**
Method for memory management
Procédé de gestion de mémoire

(30) Priorität: 18.05.2007 DE 102007023408
(43) Veröffentlichungstag der Anmeldung: 29.05.2013
(62) Teilanmeldung aus: 08773257.4
(73) Patentinhaber: Mobotix AG, 67722 Winnweiler (DE)
(72) Erfinder: Hinkel, Ralf, 67724 Höringen (DE)
(74) Vertreter: Vossius & Partner Patentanwälte Rechtsanwälte mbB

(56) Entgegenhaltungen:
- US-A1- 2003 070 036
- US-A1- 2005 281 088
- US-A1- 2007 083 697

## Beschreibung

Die vorliegende Erfindung betrifft das oberbegrifflich Beanspruchte und befasst sich somit mit der Verwaltung von Speicher.

Wenn Daten in größeren Mengen an einem Gerät anfallen, werden sie typisch auf Speicher geschrieben. Das Speichermedium kann dann zu einem späteren Zeitpunkt von der schreibenden Vorrichtung wieder gelesen werden, um die Daten zu erhalten oder es kann entnommen werden und mit einem anderen Gerät ausgelesen werden, um die Daten auf diese Weise zu transportieren. Problematisch ist dabei, dass die Einspeicherung von Daten regelmäßig so erfolgen muss, dass diese problemfrei wieder ausgelesen werden können. Dafür sind seit langem die Anlegung einer Dateizuordnungstabelle (File Allocation Table) und dergleichen bekannt, aus der die Stelle im Speicher, an der bestimmte Daten zu finden sind, ersehen werden kann. Neben der Tatsache, dass der Ort, an welchem Daten auf einem Speichermedium abgelegt sind, bekannt sein muss, ist aber für das Wiedereinlesen auch kritisch, dass die Daten nicht während des Schreib- /Lesevorganges korrumpiert werden. Bei Speichermedien wie Disketten war es deshalb während der sogenannten Formatierung üblich, einen Test dahingehend durchzuführen, ob in alle Bereiche problemfrei geschrieben werden kann oder ob defekte Speicherbereiche vorliegen. Dies ist auch von Festplatten usw. bekannt. Überdies ist es bekannt, bei computerinternen Speichern wie RAM-Speicher während der Computer-Bootphase einen Speichertest durchzuführen, indem bestimmte Datenmuster in den Speicher geschrieben und wieder ausgelesen werden. Treten dabei Fehler auf, kann eine Warnmeldung ausgegeben werden.

Problematisch ist allerdings, wenn während des Betriebs eines Wechselspeichermediums Fehler auftreten oder erkannt werden müssen. Ein Test hätte hier die Notwendigkeit zur Folge, Daten sukzessive auszulesen und wieder einzuspeichern und gegebenenfalls in einer Zwischenphase einen Test auf die korrekte Funktion des Speichers durchführen zu müssen. Dies ist kritisch im Hinblick auf den Energieverbrauch zum Auslesen, Testen und Wiedereinschreiben, was insbesondere bei batteriebetriebenen Geräten problematisch sowie aufwendig ist, wenn nur eine endliche Rechenkapazität zur Verfügung steht und/oder die Speicherbandbreite beschränkt ist.

Besonders problematisch wird die Speichersicherheit dann, wenn Medien verwendet werden, die besonders ausfallträchtig sind, wie dies bei elektronischen Speichermedium, etwa USB-Sticks, Compact-Flash-Speicherkarten und dergleichen der Fall ist. Diese haben im Regelfall nur eine endliche Anzahl von Schreib-/und Lesezyklen, die das Speichermedium überdauert, bevor mit erheblichen Defekten zu rechnen ist. Dies macht den Einsatz derartiger Speichermedien für sicherheitsrelevante Vorrichtungen zumindest schwierig. Die US 2006/0031626 A1 schlägt vor, dass Nutzungsdaten eines nur für endlich viele Schreibzugriffe ausgelegten Speichers zusammen mit zu speichernden Parameterwerten abgelegt werden sollen. Ist an der Stelle der Ablage eine maximale Schreibzahl erreicht, soll diese Stelle für weitere Schreibzugriffe gesperrt und eine andere verwendet werden.

Die Aufgabe der vorliegenden Erfindung besteht darin, Neues für die gewerbliche Anwendung bereitzustellen. Bevorzugte Ausführungsformen finden sich in den Unteransprüchen.

Die vorliegende Erfindung schlägt somit ein Verfahren zur Verwaltung eines wechselbaren Flashspeichers in einer Kamera nach Anspruch 1 vor. Dabei sollen Bilddaten auf dem wechselbaren Flashspeicher abgelegt werden; Daten, die die aktuelle Abnutzung des wechselbaren Flashspeichers im Ansprechen auf zumindest eines von Schreib- und Lesezyklen, die seit dem Anlegen der Speichernutzungsdaten stattgefunden haben, anzeigen, bestimmt werden; auf dem wechselbaren Flashspeicher die Daten, die die aktuelle Abnutzung anzeigen, zusammen mit den Bilddaten in einer den Adressraum zyklisch durchlaufenden Weise abgelegt werden, um die wiederholte Verwendung von Zellen zum Ablegen der Speichernutzungsdaten zu vermeiden; die Daten, die die aktuelle Abnutzung anzeigen, mit einer maximalen Anzahl verglichen werden; und eine Warnung auf das Erreichen eines Schwellwertes erzeugt werden, und zwar bevor der wechselbare Flashspeicher eine Abnutzung erreicht hat, die einen Austausch desselben erfordert, damit die Zuverlässigkeit des wechselbaren Flashspeichers gewährleistet ist.

Wesentlich ist somit für die Erfindung, dass nicht etwa eine aktuelle Speicherauslastung weggeschrieben wird, sondern erfasst wird, wie oft ein Zugriff auf den Speicher erfolgt. Es wird somit nicht mehr der Füllgrad, sondern stattdessen die Abnutzung des Speichers erfasst, was es erlaubt, Prognosen über das zukünftige Speicherverhalten unabhängig von seinem aktuellen Füllgrad zu erstellen. Damit trägt das vorliegende Verfahren zur Erhöhung der Zuverlässigkeit der Speichernutzung bei und es ist besonders bevorzugt, es auch als zuverlässigkeitserhöhendes Verfahren einzusetzen. Die Anzahl von Speicherschreib- und/oder -lesezugriffen, im Ansprechen auf welche Speichernutzungsdaten bestimmt werden, kann einerseits eine zeitliche Anzahldichte erfassen, also etwa dann einen besonders hohen Speichernutzungsgrad signalisieren, wenn sehr oft kurz nacheinander auf den Speicher schreibend oder lesend zugegriffen wird. Auch in einem solchen Fall wird eine Speichernutzung zuverlässiger, weil damit Zugriffszeiten usw. besser erfasst werden können. Bevorzugt meint aber die Anzahl der Speicherschreib- und/oder -lesezugriffe, im Ansprechen auf welche die Speichernutzungsdaten bestimmt werden, die Integralmenge an Schreib -und/oder Lesezugriffen, etwa durch Angabe einer Absolutzahl von schreibenden oder lesenden Zugriffen, was etwa bei Festplatten sinnvoll ist, weil oftmals besonders bei wenig benutzten Speichern, auf denen nur sporadisch Daten abgespeichert werden müssen, die ansonsten in Ruhe befindliche Festplatte neu angetrieben werden muss, was zu einer besonders großen Belastung führt. Gleichwohl wird aber typisch die Anzahl von Schreib- und/oder -lesezugriffen dahingehend gewichtet erfolgen, dass zugleich die Menge an geschriebenen und/oder gelesenen Daten bei der Bestimmung der Anzahl miterfasst wird, um etwa die Gesamtdatenmenge, die seit Erfassen der Speichernutzungsdaten geschrieben und/oder gelesen wurde, zu bestimmen.

Es ist möglich und in einem solchen Fall bevorzugt, die Speichernutzungsdaten auf eine Anzahl von Speicherzugriffen lesender oder schreibender Art zu beziehen, die als maximal zulässig bekannt ist. Dabei ist einsichtig, dass als maximal zulässig bekannte Speicherzugriffszahlen zwar statistisch ermittelt werden müssen und insoweit ein überwachter Einzelspeicher ein Verhalten aufweisen kann, das vom statistisch beobachteten mittleren Verhalten von Speichern gleicher Bauart signifikant abweichen kann. Gleichwohl ist es möglich, die Speichernutzungsdaten auf eine solche Anzahl zu beziehen, beispielsweise in Form einer Prozentangabe einer Speicherabnutzung. Das typische Versagensverhalten von Speichern kann dabei mitberücksichtigt werden, etwa indem zunächst bei einer Speichermedium-Formatierung sichergestellt wird, dass keine Anfangsausfälle auftreten (sogenannte "Kindersterblichkeit" elektronischer oder anderer Vorrichtungen) und dass danach, wenn z.B. bei der Formatierung keine Fehler erkannt werden, eine Anzahl von Speicherzugriffen herangezogen wird, in der, je nach Sicherheitsbedürfnis des Speichernutzers, z.B. 95 oder 99% aller Speichermedien noch fehlerfrei funktionieren.

Die Anzahl kann dann beispielsweise durch Angabe einer prozentualen Abnutzung festgehalten werden. Die auf die Anzahl von Speicherschreib- und/oder -lesezugriffen bezogenen Speichernutzungsdaten können und sollen erfindungsgemäß auf dem Speichermedium selbst abgelegt werden. Dies hat den Vorteil, dass bei Wechselmedien, für welche das Verfahren der vorliegenden Erfindung und die entsprechenden Treiber bevorzugt sind, die relevanten Daten mittransferiert werden und ein Nutzer nach Auslesen der entsprechenden Kennung feststellen kann, ob sich eine weitere Nutzung noch ungeachtet einer noch nicht erreichten, als zulässig bekannten Maximalanzahl von Speicherzugriffen erfolgten Speichernutzung anbietet. Dies kann u.a. verneint werden, wenn ein Speichermedium etwa in einer Kamera nur selten ausgetauscht werden muss, dort aber intensiv auf das Medium zugegriffen werden muss und dann ein gegebenenfalls aufwendiger, weil mit Bewegung an der Kamera oder dergleichen verbundener Austausch nur zur Sicherung der Speicherzuverlässigkeit erfolgen muss, ohne dass das Medium an sich bereits einen den Wechsel erfordernden Abnutzungsgrad erreicht hat.

Aus dem Vorstehenden wird ersichtlich sein, dass das Verfahren Flash-Speichern besonders sinnvoll ist, da gerade diese oftmals dann verwendet werden, wenn Daten in kritischen Situationen transferiert werden müssen.

Weiter ist es möglich, auf einer den Speicher nutzenden Vorrichtung die Nutzungsdaten des Wechselmediums abzulegen und zwar bevorzugt zusammen mit einer Kennung des Wechselmediums. Dies hat den Vorteil, dass selbst dann, wenn versehentlich Speichernutzungsdaten gelöscht werden, ein Nutzungsmaß zumindest annähernd reproduziert werden kann, da typisch beim Löschen von Dateien zumindest eine Speicherkennung wie eine Speicherbezeichnung nicht verändert wird und Löschvorgänge typisch nach einem Auslesen erfolgen, also nicht bei den häufigeren Schreibvorgängen in Geräten, die langfristig Daten zur Verfügung stellen müssen. Bei der erfindungsgemäßen Nutzung mit Kameras als Überwachungsgeräten können die Nutzungsdaten in einem Speicher wie einem EEPROM abgelegt werden; dies ist vorteilhaft, weil so eine Stromausfallsicherheit gewährleistet ist.

Erfindungsgemäß wird bei Überschreiten eines Schwellwertes ein Hinweis generiert. Es kann auch weitere Speicherung von Daten auf dem Medium unterbunden werden. Neben einer Hinweisgenerierung bei Schwellwertüberschreiten ist auch eine stetige oder auf Anforderung oder dergleichen erfolgende Anzeige bzw. Hinweisgenerierung über den Nutzungsstand möglich. Dies kann z. B. durch eine Balkenanzeige (LCD-Balken usw.) erfolgen.

Ob beide Schritte unternommen werden, Hinweisgenerierung und Neueinspeicherungsunterbindung, wird davon abhängig sein, wie kritisch der Erhalt der Daten tatsächlich ist und ob gegebenenfalls Hinweise sofort übermittelt werden können. Dies ist etwa bei netzgebundenen Kameras der Fall, die selbsttätig eine Verbindung herstellen können, um Warnhinweise an einen Administrator oder dergleichen abzusetzen oder dauerhaft über ein Netzwerk zu kommunizieren. Ein solcher Hinweis kann z. B. als SMS-Signal, als email, über Pager usw. erfolgen, aber auch optisch, z. B. durch blinkende LED am Gerät oder in dessen Nähe bzw. einer Zentrale.

Schutz wird auch beansprucht für eine Vorrichtung derart nach Anspruch 13.

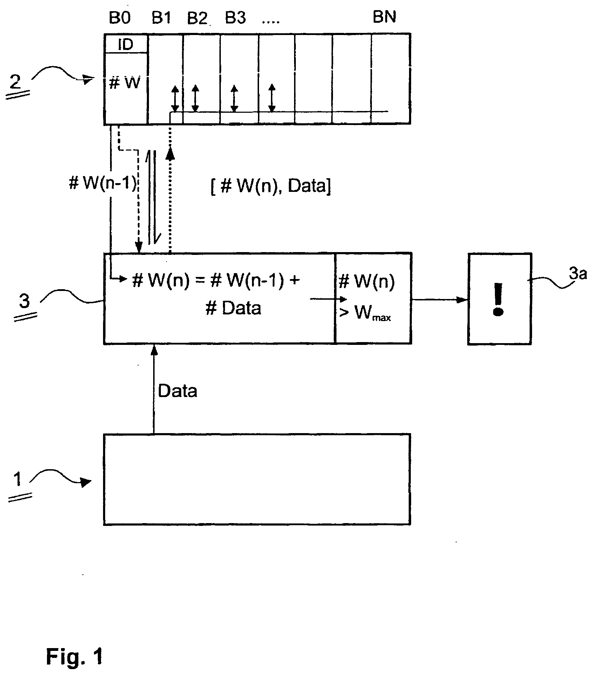

Die Erfindung wird im Folgenden nur beispielsweise beschrieben anhand der Zeichnung. In dieser ist dargestellt durch
- Fig. 1: ein die Ausführung des Verfahrens betreffendes Diagramm.

Nach Figur 1 ist eine allgemein mit 1 bezeichnete Vorrichtung 1 dazu ausgebildet, Daten für einen Speicher 2 bereitzustellen, wobei sie so ausgebildet ist, dass auch auf die Nutzung des Speichers bezogene Speicherdaten #W(n) gleichfalls für den Speicher 2 bereitgestellt werden, wobei diese Speichernutzungsdaten im Ansprechen auf eine Anzahl von Speicherschreib- und/oder -lesezugriffen zu bestimmen sind. Im vorliegenden Beispiel ist die Vorrichtung 1 eine Überwachungskamera, die kontinuierlich Überwachungsdaten in dem Speicher 2 abspeichert bzw. bereitstellt.

Der Speicher 2 ist im vorliegenden Fall ein USB-Stick, dessen Speicherkapazität ausreicht, um für einen bestimmten Überwachungszeitraum wie beispielsweise eine Woche ohne Speichermedienwechsel und ohne Überfüllung des Speichers die Bilddaten aus der Überwachungskamera 1 aufzeichnen zu können. Die Kamera 1 ist dazu ausgelegt, nach einer Woche die ältesten Bilddaten auf den USB-Stick zu überschreiben. Überdies ist der USB-Stick, wie bei elektronischen Wechselspeichermedien per se bekannt, dazu ausgebildet, die zu speichernden Daten für den Benutzer transparent gleichmäßig auf Blöcke so zu verteilen, dass möglichst alle Blöcke weitgehendst gleichmäßig benutzt werden.

Die für die Speicherung von aufzuzeichnenden Bilddaten vorgesehenen Speicherblöcke sind in Figur 1 mit B1 bis BN bezeichnet. Die Menge an Daten, die zu einem gegebenen Einspeicherungszeitpunkt, beispielsweise bei der Einspeicherung eines Frames auftritt, wird mit #Data bezeichnet. Diese Menge bzw. Größe des zu speichernden Datenblockes ist dabei vorliegend streng zu unterscheiden von den eigentlichen Daten selbst.

Erfindungsgemäß ist nun ein Speicherblock B0 im USB-Speicher 2 reserviert, in dem eine Anzahl #W abgelegt ist, die für die Gesamtanzahl von Schreibzugriffen auf das Speichermedium 2 indikativ ist. Es ist weiter eine Stufe 3 vorgesehen, die insbesondere durch das Betriebssystem der Kamera 1 realisiert sein kann, in welcher die Menge an aktuell einzuspeichernden Daten #Data zu der Gesamtmenge an Daten, die bereits zuvor auf dem USB-Stick abgelegt worden sind, #W(n-1), addiert werden, um ein aktuelles Gesamtmaß #W(n) an insgesamt auf dem USB-Stick 2 seit Beginn einer Erfassung von Speichernutzungsdaten geschriebenen Datenmengen zu erhalten. Die auf die Gesamtanzahl von erfassten Speicherschreib- und/oder - lesezugriffen bezogene Zahl #W(n) wird vorliegend mit einem Maximalmaß Wₘₐₓ verglichen, das angibt, wie groß im statistischen Mittel die Anzahl von Speicherzugriffen sein kann, bevor sich Fehler durch Speicherverschleiß häufen. Durch diesen Vergleich kann bei Überschreiten einer kritischen Zahl eine Warnung, angedeutet bei 3a, ausgegeben werden und andererseits kann das aktualisierte Maß der integralen Speichernutzung #W(n) als neue Speichernutzungsdaten im Block B0 abgelegt werden. Es ist einsichtig, dass die Warnung, die bei 3a angedeutet ist, auf dem Speichermedium abspeicherbar ist, um gegebenenfalls mit Daten ausgelesen zu werden, sobald ein Benutzer den USB-Stick entfernt und Daten von diesem abzieht und/oder dass eine Fernwartung angefordert werden kann. Alternativ ist eine Warnung übrigens bei Auslesen des Speichers generierbar. All dies geschieht aufgrund des Vergleichs der tatsächlichen Zugriffe gegen ein statistisch festgestelltes Maximum an Zugriffen, die typisch möglich sind, ohne dass bereits signifikante Mengen an Ausfällen beobachtet sein müssen. Es sei aber darauf hingewiesen, dass gleichwohl eine Speicherüberprüfung, beispielsweise durch einen Paritätscheck regelmäßig zusätzlich durchgeführt werden kann, um auch dann Warnungen abzugeben, wenn ein konkretes Fehlverhalten ermittelt wird. Auch können konkrete Speicherfelder zum Anlass genommen werden, eine Warnung auszugeben.

Die Erfindung wird benutzt wie folgt:
Wenn ein neuer USB- oder anderer Wechselmassenspeicher an die Vorrichtung 1 angeschlossen wird, wird zunächst das Speichermedium initialisiert, indem eine Speicherkennung ID in den Speicherblock B0 geschrieben und festgehalten wird, dass die Anzahl für dieses Medium erfasster Schreibzugriffe #W(0) identisch gleich null ist. Nach dieser Initialisierung wird die Vorrichtung 1 in Betrieb gesetzt und es wird mit der Einspeicherung von Daten auf den USB-Stick begonnen. Mit jedem Datenblock, der auf den USB-Stick übertragen und eingespeichert werden soll, wird die vorherige Zahl an bereits erfolgten Speicherzugriffen #W(n-1) aktualisiert, indem diese Zahl aus dem Block B0 ausgelesen wird und zu dieser Zahl die Größe des aktuell zu schreibenden Datenblockes #Data addiert wird. Das erhaltene Ergebnis #W(n), das für die aktuelle Menge an auf dem USB-Stick insgesamt bereits erfolgten Schreibzugriffen indikativ ist, wird dann in den Block B0 unter Überschreiben des vorherigen Ergebnisses #W(n-1) geschrieben. Die Daten werden an die Blöcke B1 bis BN übertragen. Es sei darauf hingewiesen, dass, insoweit als durch den regelmäßigen Zugriff auf den Block B0 dort ein erhöhter Verschleiß zu erwarten ist, die per se bekannte Verteilung von Daten auf physikalische Speicherblöcke auch den Block B0 erfassen kann. Insofern ist nicht zwingend erforderlich, dass die Speichernutzungsdaten regelmäßig physikalisch an den selben Speicherort geschrieben werden müssen, so dass dort kein häufigerer Zugriff erfolgt als an anderen Speicherstellen.

Wenn ein Benutzer den USB-Stick nach einer bestimmten Zeit abzieht, etwa weil ein kritisches Ereignis beobachtet wurde und die Bilddaten dazu ausgewertet werden müssen, wird er einen anderen USB-Stick an der Kamera vorsehen, damit die Bilddatenaufzeichnung fortgesetzt werden kann. Dieser andere USB-Stick wird entweder bereits eine Kennung ID im Block B0 aufweisen und auch die Anzahl von bereits auf dem ausgetauschten USB-Stick in früheren Speicherbenutzungen abgespeicherten Datenblöcken enthalten, so dass der frühere Wert #W(n-1) für den ausgetauschten USB-Stick bei jedem Einschreiten von Daten aktualisiert werden kann oder der ausgetauschte USB-Stick ist noch nicht an einer Überwachungskamera verwendet worden und hat demgemäß keine entsprechende Kennung, so dass diese wie oben angegeben durch Initialisierung anzulegen ist. Dabei wird gegebenenfalls davon ausgegangen, dass der USB-Stick zuvor nicht signifikant benutzt worden ist, was gerade typisch deshalb unkritisch ist, weil besonders im Dauerbetrieb an Überwachungsvorrichtungen intensive Speichernutzungen erfolgen, während anderenfalls die Menge an Daten, die von einem einfachen Nutzer etwa im Bürobetrieb auf USB-Sticks gespeichert wird, allenfalls gering ist.

Der zuvor entfernte USB-Stick kann dann ausgelesen werden, wobei gleichzeitig ein Maß für dessen Abnutzung am Auslesegerät, beispielsweise einem zur Kamera mitgebrachten Laptop, mitausgelesen werden kann, um über die Weiternutzung des Speichers zu entscheiden. So kann festgelegt sein, dass ein Austausch bereits dann nötig ist, weil der ausgelesene USB-Stick vermutlich nicht mehr länger als weitere drei Wochen benutzt werden kann, die typischen Wartungsintervalle aber mit vier Wochen allgemein länger sind.

Es kann im Übrigen am USB-Stick selbst ebenfalls eine Anzeige, beispielsweise in LCD-Form oder dergleichen, vorgesehen sein, die bei Betrieb automatisch anspricht. Dazu können USBinterne Mikrocontroller ausreichen, die lediglich den Wert #W im Block B0 gegen den Wert Wₘₐₓ, der für den USB-Stick herstellerbedingt oder benutzerbedingt festgelegt ist, vergleichen, um eine Warnung oder etwa eine Bargraphanzeige zu aktivieren.

Es sei nun darauf hingewiesen, dass es möglich ist, durch Verwendung eines geeigneten Betriebs- und/oder Filesystems die Mehrfachverwendung von Zellen insbesondere zwecks Nutzungsdatenspeicherung zu vermeiden. Dabei können mit zu speichernden, zyklisch im Adressraum abgelegten Daten nach jedem Datenblock bzw. Datenstrom zusätzlich Nutzungsdaten in fortlaufender Weise mitgespeichert werden. Aus diesen kann dann die Gesamtnutzung erhalten werden. Durch das erfindungsgemäße zyklische Durchlaufen des Adressraums wird auch die Speicherposition der Nutzungsdaten verändert. Insbesondere bei bekannter Größe wegzuschreibender Daten brauchen die Nutzungsdaten nicht nachgestellt zu sein.

Offenbart wurde somit vorstehend ein Verfahren zur Speicherverwaltung, bei welchem auf die Nutzung des Speichers bezogene Speichernutzungsdaten abgelegt werden, wobei die Speichernutzungsdaten im Ansprechen auf eine Anzahl von Speicherschreib- und/oder -lesezugriffen bestimmt werden.

Offenbart wurde bei einem solchen Verfahren zur zuverlässigkeitserhöhenden Speicherverwaltung, dass auf eine maximale als zuverlässig bekannte Anzahl von Speicherzugriffen bezogene Daten ablegt werden.

Offenbart wurde auch, dass ein solches Verfahren sich dadurch auszeichnen kann, dass die auf die Anzahl von Speicherschreib- und/oder -lesezugriffe bezogene Speichernutzungsdaten auf dem Speichermedium abgelegt werden.

Es wurde offenbart, dass bei derartigen Verfahren das Speichermedium ein Wechselmedium sein kann.

Weiter wurde für ein solches Verfahren offenbart, dass die Speichernutzungsdaten im Ansprechen auf ein seit Anlegen der Speichernutzungsdaten für die jeweils erfolgten Schreib- und/oder -lesezugriffe bestimmt werden können.

Es wurde auch weiter offenbart, dass bei einem solchen Verfahren bei Überschreiten eines Schwellwertes ein Hinweis generiert werden kann und/oder eine weitere Speicherung auf dem Medium unterbleiben kann.

Offenbart sei auch, dass ein Treiber zum Betrieb eines Speichermediums nach einem entsprechenden Verfahren vorgesehen werden kann.

Offenbart sei weiter, dass bei einem Speichermedium im Ansprechen auf eine erfolgte Anzahl von Speicherschreib- und/oder -lesezugriffen angelegte Speichernutzungsdaten im Speicher gespeichert werden.

## Patentansprüche

1. Verfahren zur Verwaltung eines wechselbaren Flashspeichers (2) in einer Kamera (1), die für eine sicherheitsrelevante Überwachung verwendet wird,
wobei das Verfahren umfasst, dass:
Bilddaten auf dem wechselbaren Flashspeicher (2) abgelegt werden;
Daten, die die aktuelle Abnutzung des wechselbaren Flashspeichers (2) im Ansprechen auf zumindest eines von Schreib- und Lesezyklen, die seit dem Anlegen der Speichernutzungsdaten stattgefunden haben, anzeigen, bestimmt werden;
auf dem wechselbaren Flashspeicher (2) die Daten, die die aktuelle Abnutzung anzeigen, zusammen mit den Bilddaten in einer den Adressraum zyklisch durchlaufenden Weise abgelegt werden, um die wiederholte Verwendung von Zellen zum Ablegen der Speichernutzungsdaten zu vermeiden;
die Daten, die die aktuelle Abnutzung anzeigen, mit einer maximalen Anzahl verglichen werden; und
eine Warnung auf das Erreichen eines Schwellwertes erzeugt wird, und zwar bevor der wechselbare Flashspeicher (2) eine Abnutzung erreicht hat, die einen Austausch desselben erfordert, damit die Zuverlässigkeit des wechselbaren Flashspeichers (2) gewährleistet ist.

2. Verfahren nach Anspruch 1, wobei weiter:
Daten, die sich auf die maximale Anzahl beziehen, welche einer maximalen Anzahl von als zuverlässig bekannten Speicherzugriffsoperationen entspricht, abgelegt werden.

3. Verfahren nach Anspruch 1, das weiter umfasst, dass Daten, die sich auf eine Anzahl von zumindest einem von Speicherschreib- und lesezugriffsoperationen auf dem wechselbaren Flashspeicher (2) beziehen, abgelegt werden.

4. Verfahren nach Anspruch 1, worin der wechselbare Flash- Speicher ein USB-Stick oder ein Flash-Karten Speicher ist.

5. Verfahren nach Anspruch 1, das weiter umfasst, dass ein weiteres Ablegen auf dem wechselbaren Flashspeicher (2) verhindert wird, wenn der Schwellwert überschritten wird.

6. Nichtflüchtiges, computerlesbares Speichermedium mit computerausführbaren Anweisungen, worin die Anweisungen bei Ausführung durch einen Computer den Computer dazu veranlassen, ein Verfahren zur Verwaltung eines wechselbaren Flashspeichers (2) in einer Kamera (1) auszuführen, die für eine sicherheitsrelevante Überwachung verwendet wird, wobei das Verfahren umfasst, dass
Bilddaten auf dem wechselbaren Flashspeicher (2) abgelegt werden;
Daten, die die aktuelle Abnutzung des wechselbaren Flashspeichers (2) im Ansprechen auf zumindest eines von Schreib- und Lesezyklen, die seit dem Anlegen der Speichernutzungsdaten stattgefunden haben, anzeigen, bestimmt werden;
auf dem wechselbaren Flashspeicher (2) die Daten, die die aktuelle Abnutzung anzeigen, zusammen mit den Bilddaten in einer den Adressraum zyklisch durchlaufenden Weise im Adressraum abgelegt werden, um die wiederholte Verwendung von Zellen zum Ablegen der Speichernutzungsdaten zu vermeiden;
die Daten, die die aktuelle Abnutzung anzeigen, mit einer maximalen Anzahl verglichen werden; und
eine Warnung auf das Erreichen eines Schwellwertes erzeugt wird, und zwar bevor der wechselbare Flashspeicher (2) eine Abnutzung erreicht hat, die einen Austausch desselben erfordert, damit die Zuverlässigkeit des wechselbaren Flashspeichers (2) gewährleistet ist.

7. Verfahren nach Anspruch 1, worin die maximale Anzahl einen statistischen Mittelwert von Speicherzugriffs-Operationen anzeigt, bevor Abnutzungsfehler des wechselbaren Flashspeichers (2) auftreten.

8. Verfahren nach Anspruch 1, wobei weiter vorgesehen ist, dass Bilddaten durch die Kamera (1) auf dem wechselbaren Flashspeicher (2) für einen vorbestimmten Zeitraum kontinuierlich aufgenommen werden.

9. Verfahren nach Anspruch 1, wobei weiter vorgesehen ist, dass die Warnung auf einem Display angezeigt wird.

10. Verfahren nach Anspruch 1, worin weiter vorgesehen ist, dass die Warnung in der Form eines SMS-Signals oder einer E-Mail erzeugt wird.

11. Verfahren nach Anspruch 1, wobei weiter vorgesehen ist, dass Speichernutzungsdaten auf einem Display in der Form eines Balkengraphen kontinuierlich angezeigt werden.

12. Verfahren_nach Anspruch 1, worin die Daten, die die aktuelle Abnutzung anzeigen, ein Maß der Gesamtabnutzung des gesamten wechselbaren Flashspeichers (2) anzeigen.

13. Vorrichtung mit
einer Speicherstufe (3), die dazu angeordnet ist, Bilddaten auf einem wechselbaren Flashspeicher (2) abzulegen;
einer Bestimmungsstufe, die dazu angeordnet ist, Daten, die die aktuelle Abnutzung des wechselbaren Flashspeichers (2) angeben, im Ansprechen auf zumindest eines von Schreib- und Lesezyklen, die seit dem Anlegen von Speicher-Nutzungsdaten stattgefunden haben, zu bestimmen;
einer Vergleichsstufe, die dazu angeordnet ist, die Daten, die die aktuelle Abnutzung angeben, mit einer maximalen Anzahl zu vergleichen;
und
einer Erzeugungsstufe, die dazu angeordnet ist, eine Warnung auf das Überschreiten eines Schwellwertes zu erzeugen, um so die Zuverlässigkeit des wechselbaren Flashspeichers (2) sicherzustellen, bevor der wechselbare Flashspeicher (2) eine Abnutzung erreicht hat, die einen Austausch desselben erfordert;
wobei
die Speicherstufe (3) dazu angeordnet ist, auf dem wechselbaren Flashspeicher (2) die Daten, die die augenblickliche Abnutzung anzeigen, zusammen mit den Bilddaten in einer den Adressraum zyklisch durchlaufenden Weise abzulegen, um die wiederholte Verwendung von Zellen zum Ablegen der Speicher-Nutzungsdaten zu vermeiden.

## Claims

1. Method for managing an exchangeable flash memory (2) in a camera (1) which is used for security-relevant monitoring,
wherein the method comprises:
storing image data in the exchangeable flash memory (2);
determining data which indicate the current wear and tear of the exchangeable flash memory (2) in response to at least one of writing and reading cycles which have taken place since the creation of the memory usage data;
storing the data which indicate the current wear and tear together with the image data in the exchangeable flash memory (2) in a manner which cyclically runs through the address space in order to avoid the repeated use of cells to store the memory usage data;
comparing the data which indicate the current wear and tear with a maximum number; and
generating a warning upon the reaching of a threshold value, specifically before the exchangeable flash memory (2) has reached a level of wear and tear which requires the flash memory to be replaced, such that the reliability of the exchangeable flash memory (2) is ensured.

2. Method according to Claim 1, wherein furthermore: data which relate to the maximum number which corresponds to a maximum number of memory access operations known as reliable are stored.

3. Method according to Claim 1, which further comprises storing data which relate to a number of at least one of memory write and read access operations in the exchangeable flash memory (2).

4. Method according to Claim 1, wherein the exchangeable flash memory is a USB stick or a flash card memory.

5. Method according to Claim 1, which further comprises preventing further storage in the exchangeable flash memory (2) if the threshold value is exceeded.

6. Non-volatile computer-readable storage medium having computer-executable instructions, wherein the instructions, during execution by a computer, cause the computer to carry out a method for managing an exchangeable flash memory (2) in a camera (1) which is used for security-relevant monitoring, wherein the method comprises
storing image data in the exchangeable flash memory (2);
determining data which indicate the current wear and tear of the exchangeable flash memory (2) in response to at least one of writing and reading cycles which have taken place since the creation of the memory usage data;
storing the data which indicate the current wear and tear together with the image data in the exchangeable flash memory (2) in the address space in a manner which cyclically runs through the address space in order to avoid the repeated use of cells to store the memory usage data;
comparing the data which indicate the current wear and tear with a maximum number; and
generating a warning upon the reaching of a threshold value, specifically before the exchangeable flash memory (2) has reached a level of wear and tear which requires the flash memory to be replaced, such that the reliability of the exchangeable flash memory (2) is ensured.

7. Method according to Claim 1, wherein the maximum number indicates a statistical mean value of memory access operations before wear and tear errors of the exchangeable flash memory (2) occur.

8. Method according to Claim 1, wherein provision is also made for image data to be continuously recorded by the camera (1) in the exchangeable flash memory (2) for a predetermined period.

9. Method according to Claim 1, wherein provision is also made for the warning to be displayed on a display.

10. Method according to Claim 1, wherein provision is also made for the warning to be generated in the form of an SMS signal or an email.

11. Method according to Claim 1, wherein provision is also made for memory usage data to be continuously displayed on a display in the form of a bar chart.

12. Method according to Claim 1, wherein the data which indicate the current wear and tear indicate a degree of the total wear and tear of the entire exchangeable flash memory (2).

13. Apparatus having
a memory stage (3) which is arranged to store image data in an exchangeable flash memory (2);
a determination stage which is arranged to determine data which indicate the current wear and tear of the exchangeable flash memory (2) in response to at least one of writing and reading cycles which have taken place since the creation of memory usage data;
a comparison stage which is arranged to compare the data which indicate the current wear and tear with a maximum number;
and
a generation stage which is arranged to generate a warning of the exceeding of a threshold value in order to thus ensure the reliability of the exchangeable flash memory (2) before the exchangeable flash memory (2) has reached a level of wear and tear which requires the flash memory to be replaced;
wherein
the memory stage (3) is arranged to store the data which indicate the current wear and tear together with the image data in the exchangeable flash memory (2) in a manner which cyclically runs through the address space in order to avoid the repeated use of cells to store the memory usage data.

## Revendications

1. Procédé pour la gestion d'une mémoire flash interchangeable (2) dans une caméra (1), laquelle est utilisée pour une surveillance en matière de sécurité,
dans lequel le procédé comprend ce qui suit :
des données d'image sont enregistrées dans la mémoire flash interchangeable (2) ;
des données sont déterminées, lesquelles indiquent l'usure actuelle de la mémoire flash interchangeable (2) en réponse à au moins l'un parmi des cycles d'écriture et de lecture, lesquels ont eu lieu depuis la création des données d'utilisation de mémoire ;
dans la mémoire flash interchangeable (2) sont enregistrées celles des données qui indiquent l'usure actuelle, ensemble avec les données d'image, d'une manière consistant à parcourir cycliquement l'espace d'adresse, pour éviter l'utilisation répétée de cellules pour l'enregistrement des données d'utilisation de mémoire ;
les données qui indiquent l'usure actuelle sont comparées avec un nombre maximal ; et
un avertissement quant à l'atteinte d'une valeur de seuil est généré, et ce avant l'atteinte par la mémoire flash interchangeable (2) d'une usure qui exige un échange de celle-ci pour garantir la fiabilité de la mémoire flash interchangeable (2).

2. Procédé selon la revendication 1, dans lequel, en outre :
des données en rapport avec le nombre maximal, lequel correspond à un nombre maximal d'opérations d'accès mémoire connues comme étant fiables, sont enregistrées.

3. Procédé selon la revendication 1, lequel comprend en outre le fait que des données en rapport avec un nombre d'au moins l'une parmi des opérations d'accès mémoire en écriture et lecture dans la mémoire flash interchangeable (2), sont enregistrées.

4. Procédé selon la revendication 1, dans lequel la mémoire flash interchangeable est une clé USB ou une mémoire à carte flash.

5. Procédé selon la revendication 1, comprenant en outre le fait qu'un autre enregistrement dans la mémoire flash interchangeable (2) est empêché lorsque la valeur de seuil est dépassée par le haut.

6. Support d' enregistrement non volatil lisible par ordinateur avec des instructions exécutables par ordinateur, dans lequel les instructions, en cas d'exécution par un ordinateur, incitent l'ordinateur à exécuter un procédé pour la gestion d'une mémoire flash interchangeable (2) dans une caméra (1), laquelle est utilisée pour une surveillance en matière de sécurité, dans lequel le procédé comprend ce qui suit :
des données d'image sont enregistrées dans la mémoire flash interchangeable (2) ;
des données sont déterminées, lesquelles indiquent l'usure actuelle de la mémoire flash interchangeable (2) en réponse à au moins l'un parmi des cycles d'écriture et de lecture, lesquels ont eu lieu depuis la création des données d'utilisation de mémoire ;
dans la mémoire flash interchangeable (2) sont enregistrées, dans l'espace d'adresse, celles des données qui indiquent l'usure actuelle, ensemble avec les données d'image, d'une manière consistant à parcourir cycliquement l'espace d'adresse, pour éviter l'utilisation répétée de cellules pour l'enregistrement des données d'utilisation de mémoire ;
les données qui indiquent l'usure actuelle sont comparées avec un nombre maximal ; et
un avertissement quant à l'atteinte d'une valeur de seuil est généré, et ce avant l'atteinte par la mémoire flash interchangeable (2) d'une usure qui exige un échange de celle-ci pour garantir la fiabilité de la mémoire flash interchangeable (2).

7. Procédé selon la revendication 1, dans lequel le nombre maximal indique une valeur moyenne statistique d'opérations d'accès mémoire avant l'apparition d'erreurs d'usure de la mémoire flash interchangeable (2).

8. Procédé selon la revendication 1, dans lequel on prévoit en outre que des données d'image soient enregistrées en continu par la caméra (1) dans la mémoire flash interchangeable (2) pour une durée prédéfinie.

9. Procédé selon la revendication 1, dans lequel on prévoit en outre que l'avertissement soit affiché sur un écran.

10. Procédé selon la revendication 1, dans lequel on prévoit en outre que l'avertissement soit généré sous la forme d'un signal SMS ou d'un courrier électronique.

11. Procédé selon la revendication 1, dans lequel on prévoit en outre que des données d'utilisation de mémoire soient affichées en continu sur un écran sous la forme d'un histogramme.

12. Procédé selon la revendication 1, dans lequel les données qui indiquent l'usure actuelle, indiquent un degré de l'usure globale de l'ensemble de la mémoire flash interchangeable (2).

13. Dispositif avec
un étage de mémoire (3), lequel est étudié pour enregistrer des données d'image dans une mémoire flash interchangeable (2) ;
un étage de détermination, lequel est prévu pour déterminer des données, lesquelles indiquent l'usure actuelle de la mémoire flash interchangeable (2) en réponse à au moins l'un parmi des cycles d'écriture et de lecture, lesquels ont eu lieu depuis la création des données d'utilisation de mémoire ;
un étage de comparaison, lequel est prévu pour comparer les données qui indiquent l'usure actuelle avec un nombre maximal ;
et
un étage de génération, lequel est prévu pour générer un avertissement quant au dépassement par le haut d'une valeur de seuil afin de garantir de la sorte la fiabilité de la mémoire flash interchangeable (2) avant l'atteinte par la mémoire flash interchangeable (2) d'une usure exigeant l'échange de celle-ci ;
dans lequel
l'étage de mémoire (3) est étudié pour enregistrer dans la mémoire flash interchangeable (2) celles des données qui indiquent l'usure actuelle, ensemble avec les données d'image, d'une manière consistant à parcourir cycliquement l'espace d'adresse, pour éviter l'utilisation répétée de cellules pour l'enregistrement des données d'utilisation de mémoire.
